# EUROPÄISCHE PATENTSCHRIFT

(11) **EP 0 517 781 B1**
(45) Veröffentlichungstag und Bekanntmachung des Hinweises auf die Patenterteilung: **14.12.1994**
(21) Anmeldenummer: 91905444.5
(22) Anmeldetag: 28.02.1991
(51) Int. Cl.: G01B 9/02

(54) **INTERFEROMETER ZUR LAGE- BZW. VERSCHIEBEWEGBESTIMMUNG EINES BEWEGLICHEN MESSSPIEGELS ODER DERGLEICHEN**
INTERFEROMETER TO DETERMINE THE POSITION OF OR DISTANCE TRAVELLED BY A MOVABLE MEASURING MIRROR OR THE LIKE
INTERFEROMETRE POUR LA DETERMINATION DE LA POSITION OU DU DEPLACEMENT D'UN MIROIR DE MESURE MOBILE OU ANALOGUE

(30) Priorität: 02.03.1990 AT 497/90
(43) Veröffentlichungstag der Anmeldung: 16.12.1992
(73) Patentinhaber: Tabarelli, Werner, Dr., 9494 Schaan (LI)
(72) Erfinder: Tabarelli, Werner, Dr., 9494 Schaan (LI)
(74) Vertreter: Torggler, Paul, Dr.
(86) Internationale Anmeldenummer: AT9100034
(87) Internationale Veröffentlichungsnummer: WO9113317

(56) Entgegenhaltungen:
- GB-A- 2 012 450
- US-A- 4 627 731
- US-A- 4 767 210
- Journal of Lightwave Technology, vol. 6, no. 10, October 1988, New York, US, A.D. Kersey et al: "Optimization and stabilization of visibility in interferometric fiber-optic sensors using input-polarization control", pages 1599-1609
- Applied Physics Letters, vol. 35, no. 11, 1st December 1979, American Institute of Physics, R. Ulrich: "Polarization stabilization on single-mode fiber", pages 840-842

## Beschreibung

Die Erfindung betrifft ein Interferometer zur Lage- bzw. Verschiebewegbestimmung eines beweglichen Meßspiegels mit einem Interferometerkopf, mit dessen Gehäuse oder Träger ein Strahlteiler zur Aufteilung des Laserlichtes in einen Meßstrahl und einen Referenzstrahl sowie eine Rekombinationseinrichtung starr in Verbindung stehen, wobei der über den beweglichen Meßspiegel geführte Meßstrahl und der über eine feste Referenzstrecke geführte Referenzstrahl in der Rekombinationseinrichtung unter Bildung mindestens eines optischen Interferenzsignals interferieren, mit einer außerhalb des Interferometerkopfes angeordneten Laserlichtquelle, wobei zwischen Laserlichtquelle und dem Strahlteiler des Interferometerkopfes zumindest eine flexible Lichtleitfaser zur Laserlichtzufuhr angeordnet ist, und mit einer photoelektrischen Detektoreinrichtung zur Auswertung der bzw. des aus der Rekombinationseinrichtung stammenden Interferenzsignale(s).

Interferometer zur Längenmessung sind bereits bekannt. Typischerweise wird bei diesen Interferometern ein Meßstrahl über einen beweglichen Meßspiegel geführt, dessen Verschiebeweg bzw. -lage festgestellt werden soll. Der Referenzstrahl durchläuft eine feste Referenzstrecke. Der vom Meßspiegel zurückkehrende Meßstrahl und der von der Referenzstrecke kommende Referenzstrahl interferieren in einer Rekombinationseinrichtung, die beispielsweise durch einen Strahlteiler gebildet sein kann. Aus dem Interferenzsignal läßt sich bei bekannter Laserlicht-Wellenlänge der Verschiebeweg bzw. damit korrelierte Daten des Meßspiegels ermitteln.

Um eine thermische Entkopplung zwischen Laserlichtquelle und den zentralen optischen Bauelementen des Interferometes (insbesondere Strahlteiler, Referenzstrecke und Rekombinationseinrichtung) zu erzielen, hat man bereits vorgeschlagen, diese zentralen Interferometerkomponenten in einem Interferometerkopf zusammenzufassen und die Laserlichtquelle außerhalb des Interferometerkopfes anzuordnen, wobei eine oder mehrere hintereinandergeschaltete Lichtleitfasern Laserlicht aus der Laserlichtquelle dem Interferometerkopf zuführen. Die Verwendung von flexiblen Lichtleitfasern zur Laserlichtzufuhr ist jedoch nicht unproblematisch. Vielmehr hat sich herausgestellt, daß das bzw. die Interferenzsignale nicht nur von der Lage des Meßspiegels oder dergleichen abhängen, sondern unerwünschterweise auch von der Lage und den Belastungen der Laserlicht-zuführenden Lichtleitfaser(n).

Aufgabe der Erfindung ist es daher, ein Interferometer der eingangs genannten Gattung zu schaffen, bei dem zur Laserlichtzufuhr zumindest eine flexible Lichtleitfaser zum Einsatz kommt und bei dem die Lage bzw. Belastungen der Lichtleitfaser nicht störend in das Meßergebnis eingehen, sodaß ein zuverlässiger und störungsfreier Betrieb möglich ist.

Dies wird gemäß einer ersten Variante der Erfindung dadurch erreicht, daß nach der bzw. den flexiblen Lichtleitfaser(n) zur Laserlichtzufuhr und vor dem Strahlteiler eine mit dem Interferometerkopf-Gehäuse oder -Träger in Verbindung stehende Polarisiereinrichtung zur Festlegung einer definierten, vorzugsweise linearen Polarisation des Laserlichtes am Eingang des Strahlteilers angeordnet ist.

Unter einer "definierten" Polarisation im Sinne der Erfindung wird ein bestimmter Polarisationszustand (linear, elliptisch oder links- bzw. rechts-zirkular) des Laserlichtes, sowie - für den linearen und elliptischen Fall - eine bestimmte räumliche Ausrichtung des polarisierten Laserlichtes bezüglich des Strahlteilers des eigentlichen Interferometers verstanden. Im Falle einer linearen Polarisation ist die räumliche Ausrichtung durch die räumliche Lage der Schwingungsrichtung des Lichtvektors gegeben, im Falle einer elliptischen Polarisation durch die räumliche Lage der großen und kleinen Ellipsenhalbachsen. Für den zuverlässigen und störungsfreien Betrieb eines Interferometers ist die Aufrechterhaltung einer definierten Polarisation des Laserlichtes am Eingang des Interferometers von entscheidender Bedeutung. Häufig kommen in Interferometern häufig Bauteile zum Einsatz, deren optische Eigenschaften von der Polarisation des Laserlichtes abhängt.

Beispielsweise hängt die Veränderung der Polarisation durch einen als Retroreflektor ausgebildeten Meßspiegel von der Polarisation des Laserlichtes am Eingang des Interferometers bzw. des dort angeordneten Strahlteilers ab. Weiters macht sich nach der Rekombination der interferierenden Lichtstrahlen (Meßstrahl und Referenzstrahl) die Interferenz nur in dem Maß in der Intensität bemerkbar, in dem der Referenzstrahl und der Meßstrahl die gleiche Polarisation haben. Besonders kritisch ist der Polarisationszustand des Laserlichtes am Eingang des Interferometers, wenn das bzw. die Interferenzsignale nach der Rekombinationseinrichtung auf bestimmte Polarisationen hin untersucht werden, um beispielsweise daraus eine Vorwärts-Rückwärts-Erkennung der Meßspiegelbewegung abzuleiten. Diese Polarisationsempfindlichkeit im Hinblick auf das Licht am Eingang des das Laserlicht in Referenz- und Meßstrahl aufteilenden Strahlteilers führt zu Problemen, wenn zur Laserlichtzufuhr zum eigentlichen Interferometer (Interferometerkopf) übliche flexible Lichtleitfasern wie beispielsweise optische Glasfasern benutzt werden, weil der Polarisationszustand am Faserende von der räumlichen Lage, sowie von Verdrehungen, mechanischen Druck und Dehnbelastungen der Lichtleitfaser abhängt.

Eine mögliche Lösung dieses Problems bestände in der Verwendung von speziellen polarisationserhaltenden Lichtleitfasern zur Zufuhr des Laserlichts von der Laserlichtquelle zum eigentlichen Interferometer. Bei Verwendung solcher polarisationserhaltenden Fasern muß die Polarisation auf der Einkoppelseite, also auf der der Lichtquelle zugewandten Seite der Lichtleitfaser kontrolliert werden, da man sonst einen großen Teil der Lichtleistung verlieren kann. In der Praxis wird man auch nicht eine durchgehende Lichtleitfaser verwenden, sondern wegen der einfacheren Handhabung mehrere hintereinandergeschaltete Lichtleitfaserstücke, die über lösbare Faserverbinder miteinander verbunden sind. Bei Verwendung von polarisationserhaltenden Fasern müssen auch diese Faser-(Steck-)Verbindungen auf die Polarisationserhaltung ausgelegt sein. Außerdem besteht bei polarisationserhaltenden Lichtleitfasern die - wenngleich auch nicht allzu große - Gefahr, daß durch starke Krümmungen übersprecher von der einen Polarisationsmode in die andere stattfinden und damit eine Änderung der Polarisation doch erfolgt. Insgesamt läßt sich feststellen, daß mit polarisationserhaltenden Lichtleitfasern alleine die nötige sehr exakte Festlegung der Polarisation am Eingang des Interferometerkopfes nicht bzw. nur mit unvertretbar hohem Aufwand möglich ist.

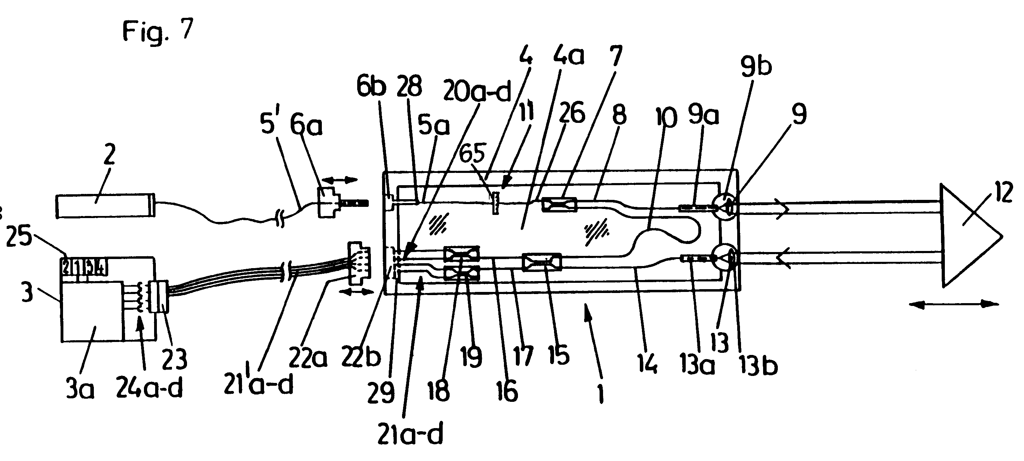

Der Artikel von A.D. Kersey et al ("Optimization and stabilization of visibility in interferometric fiberoptic sensors using input-polarization control", Journal of Lightwave Technology, Band 6, Nr. 10, Oktober 1988, New York, Seiten 1599-1609) berichtet darüber, daß der Kontrast des Interferenzmusters eines Interferometers stark von der Eingangspolarisation abhängt und schlägt als Lösung eine Eingangspolarisationsregelung vor, die die Eingangspolarisation in Abhängigkeit vom erfaßten Interferenzsignalkontrast (output fringe visibility) regelt. Dafür ist eine relativ aufwendige Modulation in einem Interferometerarm nötig, wie dies beispielsweise in Fig. 7 des genannten Artikels gezeigt ist. Bei dem bekannten Interferometer handelt es sich außerdem um kein Interferometer der Gattung gemäß Oberbegriff des Anspruches 1 der vorliegenden Anmeldung. Das bekannte Interferometer ist weder ein Interferometer zur Lage- bzw. Verschiebewegbestimmung eines beweglichen Meßspiegels, noch weist es einen definierten Interferometerkopf auf, mit dem Strahlteiler und Rekombinationseinrichtung starr in Verbindung stehen, wobei dieser Interferometerkopf über eine flexible Lichtleitfaser mit Laserlicht versorgt wird. Die Erfindung geht davon aus, daß es bei einem gattungsgemäßen Interferometer gemäß Oberbegriff des Anspruches 1 hauptsächlich in der flexiblen Lichtleitfaser zur Laserlichtzufuhr zu unkontrollierbaren Veränderungen des Polarisationszustandes des Lichtes kommen kann, während im Interferometerkopf selbst, in dem alle Teile definiert festgelegt sind, und auf der über dem Meßspiegel führenden Meßstrecke keine störenden Einflüsse auf die Polarisation des Lichtes zu erwarten sind. In dem genannten Artikel von A.D. Kersey wird auf das Problem einer undefinierten Änderung des Polarisationszustandes in der Lichtleitfaser, die von der bei der Lichtquelle angeordneten Polarisationseinstellvorrichtung (PST) zum Strahlteiler führt, gar nicht eingegangen. Vielmehr wird ausgeführt, daß die Polarisation am Ausgang der Polarisationseinstellvorrichtung PST gleich der am Eingang des Interferometers ist (Seite 1605, Zeilen 33 und 34), was bei einer langen, in praktischen Anwendungen verlegten Lichtleitfaser zur Laserlichtzufuhr gerade nicht gegeben ist.

Die Erfindung sieht vor, sich nicht bzw. nicht bis ins letzte Detail darum zu kümmern, auf welche Weise und in welchem Ausmaß die Lichtleitfasern zur Laserlichtzufuhr den Polarisationszustand bzw. -richtung des Lichtes verändern, sondern außerhalb der Laserlichtzufuhr-Lichtleitfaser eine Polarisationseinrichtung vorzusehen, die für eine definierte Polarisation des Laserlichtes am Eingang des Strahlteilers des Interferometers sorgt. Grundsätzlich kann das Laserlicht am Eingang des Strahlteilers eine definierte zirkulare oder elliptische Polarisation aufweisen. Günstiger wird es jedoch sein, wenn die Polarisation des Laserlichtes am Eingang des Strahlteilers linear ist, wobei dann mit einer "definierten" Polarisation auch gemeint ist, daß die räumliche Lage der Schwingungsrichtung des Lichtvektors bezüglich des Strahlteilers am Eingang des eigentlichen Interferometers festliegt. Gemäß der ersten Variante der Erfindung ist diese Polarisiereinrichtung nach der bzw. den flexiblen Lichtleitfasern zur Laserlichtzufuhr und vor dem Strahlteiler zur Aufteilung in Meß- und Referenzstrahl angeordnet. Die Polarisiereinrichtung liegt also zwischen dem strahlteilerseitigen Ende der Lichtleitfaser(n) und dem Strahlteiler, vorzugsweise in dessen Nähe. Eine andere, weiter hinten beschriebene Variante der Erfindung besteht im wesentlichen darin, die Polarisiereinrichtung vor dem lichtquellenseitigen Ende der flexiblen Lichtleitfaser(n) zur Laserlichtzufuhr anzuordnen, den Polarisationszustand in der Nähe des Eingangs des Strahlteilers zu erfassen und über eine Regeleinrichtung die von der Polarisiereinrichtung abgegebene Polarisation des Laserlichtes so zu regeln, daß die am Eingang des Strahlteilers vorhandene Polarisation des Laserlichtes festliegt.

Zunächst wird auf jenen Fall eingegangen, bei dem die Polarisiereinrichtung zwischen dem strahlteilerseitigen Ende der Lichtleitfaser(n) und dem Strahlteiler angeordnet ist. Eine besonders günstige Ausführungsform, bei der die Polarisiereinrichtung als Ganzes in einer definierten Lage relativ zum Strahlteiler gehalten ist, besteht darin, daß die Polarisiereinrichtung der bzw. die Strahlteiler, die Rekombinationseinrichtung(en) und gegebenenfalls weitere optische Komponenten des Interferometers mit einem Interferometerkopf-Gehäuse oder -Träger in starrer Verbindung stehen bzw. fest darin untergebracht sind, wobei dieser Interferometerkopf über die flexible Lichtleitfaser(n) mit Laserlicht aus der außerhalb des Interferometerkopfes angeordneten Laserlichtquelle versorgt wird. Das Interferometerkopf-Gehäuse bietet einen guten Schutz für die darin untergebrachten optischen Komponenten gegen Umwelteinflüsse und mechanische Einwirkung. Im Interferometerkopf-Gehäuse ist es insbesondere auch möglich, Lichtleitfasern, die die einzelnen optischen Komponenten verbinden, mit dem Interferometerkopf-Gehäuse bzw. einem Träger starr zu verbinden beispielsweise zu verkleben, sodaß es auch durch heftigere mechanische Einwirkungen zu keinen Lageverschiebungen dieser Lichtleitfasern im Interferometerkopf kommen kann. Eine solche Lageverschiebung könnte nämlich zu einer unerwünschten Veränderung der Polarisation bzw. der Interferenzsignale und damit zu einer Verfälschung der Meßergebnisse führen. Wenn man einen solchen kompakten Interferometerkopf hat, aus dem das Licht beispielsweise über eine Auskoppellinse auf die Meßstrecke gesandt wird und von dort nach Reflexion an einen Meßspiegel über eine Einkoppellinse wieder eingekoppelt wird, ist es günstig, wenn auch die photoelektrische Auswerteinrichtung in an sich bekannter Weise außerhalb dieses Interferometerkopfes liegt und über flexible Ausgangs-Lichtleitfasern die optischen Interferenzsignale aus dem Interferometerkopf erhält. Wenn man das aus der Rekombinationseinrichtung stammende optische Interferenzsignal in zwei phasenverschobene Polarisationsanteile zerlegt, die dann eine verbesserte Auswertung, beispielsweise eine Vorwärts-Rückwärts-Erkennung des beweglichen Meßspiegels zulassen,ist es günstig, wenn dies durch Polarisationsfilter geschieht, deren Achsen aufeinander senkrecht und unter 45 Grad zu jener linearen Polarisationsrichtung stehen, die durch die Polarisiereinrichtung am Eingang des Strahlteilers definiert ist. Wenn man diese Polarisationsfilter im Interferometerkopf anordnet, so spielen die Polarisationseigenschaften der flexiblen Ausgangs-Lichtleitfasern,die vom Interferometerkopf zur photoelektrischen Auswerteinrichtung führen, günstigerweise keine Rolle.

Wie bereits erwähnt, ist es die wesentlichste Aufgabe der Polarisiereinrichtung am Eingang des Strahlteilers des Interferometers, einen definierten Polarisationszustand, insbesondere eine lineare Polarisation mit vorbestimmter Schwingungsrichtung festzulegen. Damit diese Polarisiereinrichtung in der Praxis ohne größere Nachteile angewandt werden kann, ist es gemäß einem bevorzugten Merkmal der Erfindung günstig, wenn die Polarisiereinrichtung unabhängig vom vorzugsweise linearen Polarisationszustand des Laserlichtes an ihrem Eingang immer Licht durchläßt und das Licht am Ausgang der Polarisiereinrichtung eine definierte, vorzugsweise lineare Polarisation aufweist. Mit einem einfachen Polarisator alleine läßt sich dieses Merkmal offensichtlich nicht verwirklichen, weil bei einer zur Ausrichtung des Polarisators senkrechten Polarisation des eingehenden Lichtes kein Licht durchgeht. Durch einen geschickteren Aufbau der Polarisiereinrichtung läßt sich dieses Merkmal jedoch mit relativ einfachen Mitteln erfüllen. Ausführungsbeispiele dazu werden im folgenden näher beschrieben. Besonders wünschenswert für einen Betrieb des Interferometers, aber nicht unbedingt nötig, ist eine Ausbildung der Polarisiereinrichtung, die derart gestaltet ist, daß die Intensität des aus der Polarisiereinrichtung vorzugsweise linear polarisiert austretenden Laserlichtes zumindest dann, wenn das Laserlicht am Eingang der Polarisiereinrichtung linear polarisiert ist, von der Polarisation des Laserlichtes am Eingang der Polarisiereinrichtung unabhängig ist.

Eine einfache Polarisiereinrichtung, bei der das austretende Laserlicht unabhängig von der linearen Polarisation des eingehenden Laserlichtes immer dieselbe lineare Polarisationsrichtung und dieselbe Intensität aufweist, besteht im wesentlichen aus einer Viertelwellenplatte und einem dieser nachgeschalteten Polarisator, deren Achsen unter 45 Grad zueinander stehen. Der Polarisator definiert die lineare Polarisationsrichtung am Ausgang und die Viertelwellenplatte sorgt dafür, daß die Lichtintensität am Ausgang der Polarisiereinrichtung unabhängig von der linearen Polarisation am Eingang der Polarisiereinrichtung ist.

Eine weitere bevorzugte Ausführungsform der erfindungsgemäßen Polarisiereinrichtung, die zwischen dem strahlteilerseitigen Ende der Laserlichtzufuhr-Lichtleitfaser und dem Strahlteiler angeordnet werden kann, besteht darin, daß die Polarisiereinrichtung eine Einrichtung zur Aufweitung oder Aufteilung des aus der flexiblen Lichtleitfaser bzw. einer daran angeschlossenen Faser stammenden Laserlichtstrahles aufweist, daß die Polarisationseinrichtung zwei Polarisatoren mit aufeinander senkrecht stehenden Polarisationsrichtungen aufweist, die je von einem Teilstrahl durchlaufen werden, daß hinter diesen Polarisatoren weiters wenigstens ein unter 45 Grad zu den beiden genannten Polarisatoren ausgerichteter Polarisator vorgesehen ist, durch den die beiden Teilstrahler laufen und daß schließlich eine Einrichtung vorgesehen ist, um die beiden Teilstrahlen nach Durchlaufen der genannten Polarisatoren zusammenzuführen.
Um bei dieser Ausführungsform der erfindungsgemäßen Polarisiereinrichtung zu vermeiden, daß es bei bestimmten Eingangspolarisationszuständen des Laserlichtes zu einer vollständigen destruktiven Interferenz beim Zusammenführen der beiden Teilstrahlen kommt, ist es günstig, wenn man dafür sorgt, daß die beiden Teilstrahlen bei ihrer Rekombination eine unterschiedliche Intensität aufweisen. Dies kann man durch teilweise Abschwächung eines der beiden Teilstrahlen erzielen. Günstiger ist es jedoch, wenn man dazu vorsieht, daß der aufgeweitete Laserlichtstrahl die beiden senkrecht aufeinander stehenden Polarisatoren auf verschieden großen Flächen erfaßt.

Eine weitere bevorzugte Ausführungsform der erfindungsgemäßen Polarisiereinrichtung besteht darin, daß die Polarisiereinrichtung eine Aufteileinrichtung zur Aufteilung des ankommenden Laserlichtes in zwei senkrecht aufeinander linear polarisierte Teilstrahlen aufweist, daß weiters eine Polarisationsdreheinrichtung zur Drehung der Polarisationsrichtung wenigstens einer der beiden Teilstrahlen vorgesehen ist, und daß ausgangsseitig eine Rekombinationseinrichtung vorgesehen ist, in der die in ihrer linearen Polarisationsrichtung durch die Polarisationsdreheinrichtung zueinander parallel gedrehten Teilstrahlen überlagert werden. Um bei der Rekombination der beiden in ihrer Polarisationsrichtung parallel gedrehten Teilstrahlen eine vollständig destruktive Interferenz bei bestimmten Eingangspolarisationen zu vermeiden, kann bei dieser Ausführungsform der Polarisiereinrichtung eine Einrichtung zur Einstellung des Gangunterschiedes zwischen den beiden Teilstrahlen vor bzw. bei der Rekombination vorgesehen sein. Diese Gangunterschied-Einstelleinrichtung kann beispielsweise ein elektrooptisches Element oder ein piezoelektrisches Element sein, das den geometrischen Weglängenunterschied für beide Teilstrahlen verändert. Diese den Gangunterschied der beiden Teilstrahlen bei bzw. vor ihrer Rekombination verändernden Elemente lassen sich einfach und exakt regeln. Gemäß einer bevorzugten Ausführungsform werden diese Elemente bzw. der Gangunterschied der beiden Teilstrahlen direkt oder indirekt in Abhängigkeit von der Intensität des linear polarisierten Laserlichts am Ausgang der Polarisiereinrichtung geregelt. Eine "direkte" Regelung ist beispielsweise dadurch möglich, daß nun die Ausgangsintensität des Laserlichtes aus der Polarisiereinrichtung erfaßt und den Gangunterschied der beiden Teilstrahlen vor bzw. bei deren Rekombination so einstellt, daß die Ausgangsintensität maximal ist. Eine "indirekte" Regelung der Intensität des austretenden Laserlichts ist beispielsweise dann möglich, wenn die beiden Teilstrahlen an einem Strahlteiler rekombiniert werden. Ein solcher Strahlteiler weist zwei komplementäre Ausgänge auf. Einer dieser Ausgänge wird den Ausgang der Polarisiereinrichtung bilden, während der andere Ausgang ein Nebenausgang ist. Erfaßt man die Intensität des Lichtes an diesem Nebenausgang als Regel-Ist-Größe, so hat man durch Minimierung der Intensität am Nebenausgang die Möglichkeit, damit indirekt die Intensität am komplementären Hauptausgang, der den Ausgang der Polarisiereinrichtung darstellt, zu maximieren.

Weitere Vorteile und Einzelheiten der Erfindung werden in der nachstehenden Figurenbeschreibung näher erläutert.

Es zeigen die Fig. 1 eine schematische Draufsicht auf ein Ausführungsbeispiel des erfindungsgemäßen Interferometers, die Fig. 2 eine schematische perspektivische Ansicht der wesentlichen optischen Komponenten eines Ausführungsbeispiels der erfindungsgemäßen Polarisiereinrichtung, die Fig. 3 einen Längsschnitt durch ein Ausführungsbeispiel der erfindungsgemäßen Polarisiereinrichtung, die Fig. 4 eine perspektivische Ansicht eines weiteren Ausführungsbeispiels der erfindungsgemäßen Polarisiereinrichtung, die Fig. 5 eine schematische Draufsicht auf ein weiteres Ausführungsbeispiel der erfindungsgemäßen Polarisiereinrichtung, die Fig. 6 ein Ausführungsbeispiel mit einer faseroptischen Realisierung, die Fig. 7 eine schematische Draufsicht auf ein weiteres Ausführungsbeispiel und die Fig. 8 eine schematische Darstellung einer weiteren Variante des erfindungsgemäßen Interferometers.

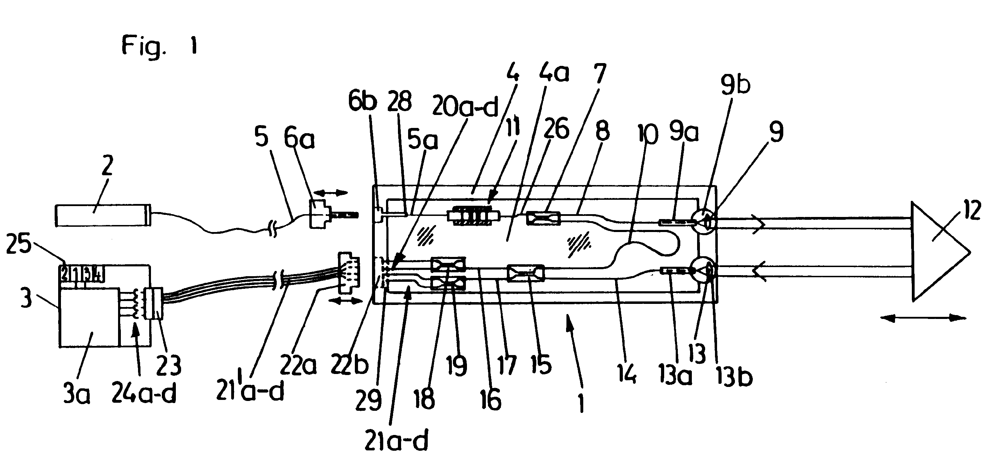

Das in Fig. 1 dargestellte Interferometer weist einen Interferometerkopf 1, eine Laserlichtquelle 2 (beispielsweise einen Helium-Neon-Laser oder eine Laserdiode) zur Versorgung des Interferometerkopfs 1 mit Laserlicht und eine photoelektrische Detektor- und Auswerteinrichtung 3 zur Auswertung der aus dem Interferometerkopf stammenden optischen Interferenzsignale auf. Der Interferometerkopf 1 ist von einem geschlossenen Gehäuse 4 aus Metall umgeben und enthält in seinem Inneren mehrere, durch monomode Glasfasern verbundene optische Komponenten, die im folgenden näher beschrieben werden. Das über die flexible Lichtleitfaser 5 dem Interferometerkopf 1 zugeführte Laserlicht aus der Laserlichtquelle 2 erreicht über eine später ausführlich beschriebene Polarisiereinrichtung einen Strahlteiler 7, der eine Aufteilung in Meß- und Referenzstrahl vornimmt. Zum lösbaren Anschluß der Lichtleitfaser 5 ist ein zweiteiliger Faserverbinder 6a,6b vorgesehen.

Der Meßstrahl wird über die monomode Glasfaser 8 und die Auskoppellinse 9 (Gradientenindexlinse) auf die außerhalb des Interferometerkopfs liegende, im Umgebungsmedium verlaufende Meßstrecke geführt. Der Referenzstrahl verläuft in der Referenzfaser 10 im Interferometerkopf 1. An einem in Richtung des Doppelpfeiles verschieblichen (nicht dargestellten) Bauteil ist der Retroreflektor 12 befestigt. Dieser Retroreflektor 12 reflektiert den Meßstrahl mit Strahlversatz zum Interferometerkopf 1 zurück. Über eine gesonderte Einkoppellinse 13 gelangt der Meßstrahl in die Glasfaser 14. Die Ausrichtung und Festlegung der Linsen 9 und 13 erfolgt über eine Einstellung der Linsenhalter 9b bzw. 13b sowie der daran angeschlossenen Faserhalter 9a bzw. 13a In der als Faserkoppler ausgeführten Rekombinationseinrichtung 15 werden der von der Meßstrecke zurückkehrende Meßstrahl und der in der Referenzfaser 10 geführte Referenzstrahl zur Interferenz gebracht. Zwei weitere Strahlteiler 18 und 19 sind an die beiden komplementären Ausgänge 16 und 17 der Rekombinationseinrichtung 15 angeschlossen. Über Polarisationsfilter 20a bis d gelangen die phasenverschobenen optischen Interferenzsignale in die zur Detektoreinrichtung 3 führenden flexiblen Lichtleitfasern 21′a bis d, welche über einen zweiteiligen Mehrfach-Faserverbinder 22a,22b lösbar mit dem Gehäuse 4 verbunden sind. Aus den vier jeweils um 90° gegeneinander phasenverschobenen Interferenzsignalen lassen sich in bekannter Weise neben dem Verschiebeweg des Retroreflektors 12 auch die Verschieberichtung und der Modulationshub des Interferenzsignals ermitteln. Dazu sind die Polarisationsfilter 20a-d unter 45° an der von der Polarisationseinrichtung 11 festgelegten linearen Polarisation(srichtung) ausgerichtet. Beide Polarisationsanteile durchlaufen dieselbe Meßstrecke. Im Referenzzweig 10 kann beispielsweise ein λ/4-Plättchen (Viertelwellen-Platte, nicht dargestellt) angeordnet sein, um eine Polarisationsrichtung gegenüber der anderen um 90° in der Phase zu verschieben. Es ist aber möglich, daß diese Phasenverschiebung durch andere Komponenten, beispielsweise im Retroreflektor 12 selbst hervorgerufen wird.

Die Detektoreinrichtung 3 weist neben einem Faserverbinder 23 vier Photodetektoren 24a bis d auf. Diese vier Photodetektoren 24a bis d erzeugen aus den optischen Interferenzsignalen elektrische Signale, die von einer Elektronikeinheit 3a ausgewertet werden. Das Ergebnis (die Lage des Retroreflektors 12) wird über eine Anzeige 25 angezeigt. Bei dem in Fig. 1 gezeigten Ausführungsbeispiel bildet das Gehäuse 4 mit dem ebenen Boden 4a einen starren Tragkörper, mit dem der Strahlteiler 7 und die Rekombinationseinrichtung 15 beispielsweise durch Verkleben starr verbunden sind. Es sind auch die den Meßstrahl führenden Lichtleitfaserstücke 8 und 14 sowie die den Referenzstrahl führende Referenzfaser 10 starr mit dem Tragkörper bzw. Gehäuseboden 4a verbunden, beispielsweise verklebt. Damit kann es im kritischen Bereich, wo Referenz- und Meßstrahl innerhalb des Interferometerkopfes 1 räumlich getrennt verlaufen, zu keiner Lageänderung der zunächst flexiblen Lichtleitfaserstücke 8, 10 und 14 kommen. Solche Lageänderungen könnten nämlich die optischen Eigenschaften (beispielsweise die Polarisation) der Lichtleitfaserstücke und damit in unerwünschter Weise die von der Rekombinationseinrichtung 15 abgegebenen optischen Interferenzsignale verändern und damit das Meßergebnis verfälschen.

Insgesamt stehen der Strahlteiler 7, die Rekombinationseinrichtung 15, die beiden Linsen 9 und 13, die den Meßstrahl führenden Lichtleitfaserstücke 8 und 14 sowie die den Referenzstrahl führende Referenzfaser 10 starr mit dem Interferometerkopf-Gehäuse 4 (Tragkörper) in Verbindung, womit sich eine gegen Druck-, Stoß- und Schockeinwirkungen umempfindliche Baueinheit ergibt. Diese Unempfindlichkeit gegen mechanische Einflüsse wird weiters noch dadurch verbessert, daß auch die übrigen Komponenten und Lichtleitfasern im Interferometerkopf starr mit diesem verbunden, beispielsweise verklebt sind. Insbesondere ist zur Führung des Laserlichts vom Eingang 28 des Interferometerkopfes 1 zur Polarisiereinrichtung 11 und von dieser zum Strahlteiler 7 jeweils eine starr mit dem Interferometerkopf-Gehäuse 4 verbundene Lichtleitfaser 5a bzw. 26 vorgesehen, und es sind zur Führung der optischen Interferenzsignale nach der Rekombinationseinrichtung 15 zum Ausgang 29 ebenfalls starr mit dem Gehäuse 4 verbundene Lichtleitfasern 16,17 und 21a bis d vorgesehen. Zusätzlich bietet das im wesentlichen geschlossene Gehäuse 4, das beispielsweise mit einem lösbar befestigten Deckel dicht verschließbar ist, einen Schutz gegen mechanische Störeinflüsse. Außerdem erhöht ein solches Gehäuse die Unempfindlichkeit gegen Schwankungen der Umweltbedingungen.

Die Lichtleitfasern im Interferometerkopf 1 sind im wesentlichen in einer Ebene verlegt (Aufliegen auf dem ebenen Boden 4a des Gehäuses 4), womit es zu keinen unkontrollierten Veränderungen des Polarisationszustandes des in den Lichtleitfasern geführten Laserlichtes kommt.

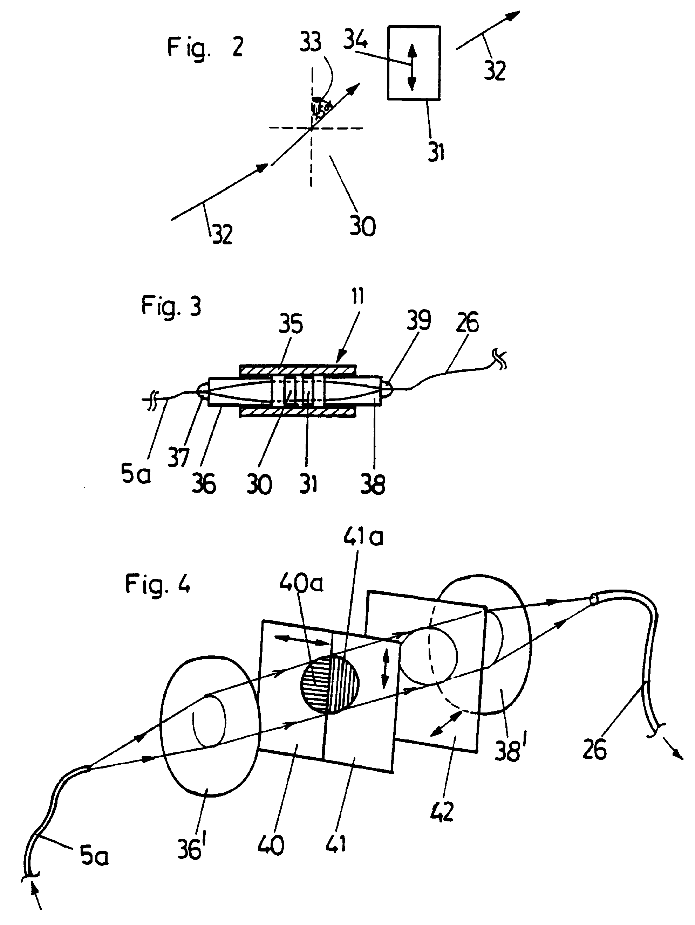

Während man innerhalb des Interferometerkopfes 1 durch geeignete Festlegung der optischen Komponenten und Lichtleitfasern eine Unempfindlichkeit gegenüber mechanischen Einwirkungen relativ leicht erzielen kann, ist dies bei der flexiblen Lichtleitfaser, die zur Laserlichtzufuhr aus der Laserlichtquelle 2 zum Interferometerkopf 1 dient, nicht der Fall.
Vielmehr kommt es durch Lageänderungen und Verdrehungen sowie durch mechanische Druck- und Dehnbelastungen auf die flexible Lichtleitfaser (im vorliegenden Ausführungsbeispiel wegen der günstigen Lichtführungseigenschaften vorzugsweise eine monomode Glasfaser) zu Veränderungen des Polarisationszustandes am interferometerkopfseitigen Ausgang der flexiblen Lichtleitfaser 5. Diese Veränderungen des Polarisationszustandes des Laserlichts am Eingang des Interferometers bzw. des Strahlteilers 7 führen zu untolerierbaren Verfälschungen des Meßergebnisses. Um dies zu vermeiden, ist erfindungsgemäß eine Polarisiereinrichtung 11 vorgesehen, die beim vorliegenden Ausführungsbeispiel zwischen der flexiblen Lichtleitfaser 5 bzw. der daran angeschlossenen Faser 5a und dem Strahlteiler 7 angeordnet ist. Diese im folgenden noch näher beschriebene Polarisiereinrichtung sorgt dafür, daß, unabhängig vom Polarisationszustand des Laserlichts an ihrem Eingang, an ihrem Ausgang bzw. am Eingang des Strahlteilers 7 des Interferometers eine in ihrer Schwingungsrichtung definierte lineare Polarisation des Laserlichts vorliegt. Die im Interferometerkopfgehäuse 4 geschützt untergebrachte Polarisiereinrichtung 11 entspricht in ihren wesentlichen polarisationsoptischen Komponenten der Fig. 2 und im Aufbau der Fig. 3.

Die wesentlichen polarisationsoptischen Komponenten der Polarisiereinrichtung in Fig. 1 sind in Fig. 2 dargestellt. Es sind dies ein Viertelwellenplättchen 30 und ein Polarisator 31, die vom Laserlicht in der mit 32 bezeichneten Richtung durchstrahlt werden. Die optische Achse 33 des (doppelbrechenden) Viertelwellenplättchens steht unter 45° zu der mit 34 bezeichneten Ausrichtung des Polarisators 31. Der Polarisator sorgt für eine definierte lineare Polarisation am Ausgang der Polarisiereinrichtung, während die Viertelwellenplatte 30 dafür sorgt, daß die Lichtleistung am Ausgang unabhängig von der Polarisation am Eingang der Polarisiereinrichtung ist, solange das in die Polarsiereinrichtung eintretende Laserlicht nur in irgendeiner Richtung linear polarisiert ist. Aber auch bei nicht Linearen Polarisationszuständen am Eingang der in Fig. 2 schematisch dargestellten Polarisiereinrichtung ist die Ausgangspolarisation jedenfalls linear und in der vom Polarisator 31 festgelegten Richtung 34. Lediglich bei einer bestimmten zirkularen Polarisation am Eingang der in Fig. 2 dargestellten einfachen Polarisiereinrichtung könnte die Intensität am Ausgang auf Null gehen. Um dies bei diesem in der Praxis sicherlich selten auftretenden Fall zu vermeiden, könnte beispielsweise das Viertelwellenplättchen 30 gegenüber dem Polarisator 31 verdreht werden, wobei die festgelegte lineare Ausgangs-Polarisationsrichtung erhalten bleibt.

Die in Fig. 3 schematisch dargestellte Viertelwellenplatte 30 und der Polarisator 31 sind, wie es in Fig. 3 dargestellt ist, in einer mechanischen Halterung 35 angeordnet. Am Eingang der in Fig. 3 dargestellten Polarisiereinrichtung 11 ist eine Kollimationslinse 36 (Gradientenindexlinse) angeordnet, die den aus der Lichtleitfaser 5a austretenden Lichtstrahl kollimiert (ausweitet und als Parallelstrahl durch die optischen Komponenten 30 und 31 schickt). Die Lichtleitfaser 5a ist an der Gradientenindexlinse 36 mittels eines Klebstoffes 37 festgeklebt. Um das aus der Polarisiereinrichtung mit einem definierten linearen Polarisationszustand austretende Laserlicht unter Beibehaltung des linearen Polarisationszustandes dem Strahlteiler 7 zuzuführen (vergleiche Fig. 1), ist eine in ihrer Lage starr festgelegte und in einer Ebene verlegte Lichtleitfaser 26 vorgesehen. Anstelle dieser Lichtleitfaser könnte auch eine Polarisationserhaltende Faser verwendet werden. Jedenfalls ist es günstig, wenn die Polarisiereinrichtung 11 in der Nähe des Strahlteilers 7 angeordnet ist, damit die von der Polarisiereinrichtung festgelegte definierte lineare Polarisation auch tatsächlich am Eingang des Strahlteilers 7 vorliegt. Zur Einkopplung des Laserlichts in die Lichtleitfaser 26 ist eine als Gradientenindexlinse ausgeführte Einkoppellinse 38 vorgesehen, an der die Lichtleitfaser 26 mittels eines Klebstoffs 39 festgeklebt ist.

Die Gradientenindexlinsen 36 und 38 weisen zylindrische Außenabmessungen auf, welche sich leicht in die rohrförmig ausgebildete Halterung 35 einsetzen und beispielsweise darin festkleben lassen. Diese einfache rohrförmige Halterung 35 gewährleistet eine optimale und dauerhafte Ausrichtung der optischen Komponenten der Polarisiereinrichtung 11. Insgesamt weist also die Polarisiereinrichtung 11 - in Lichtdurchgangsrichtung gesehen - eine eingangsseitsige Kollimationslinse 36, eine Viertelwellenplatte 30, einen Polarisator 31 und eine ausgangsseitige Einkoppellinse 38 zur Lichteinkopplung in einen zum Strahlteiler 7 führenden Lichtwellenleiter 26 auf. Um Rückreflexe von der Stirnfläche in die Laserlichtquelle zu vermeiden, kann man die Licntleitfaser 5a auch leicht exzentrisch an der Linse 36 ankleben.

Bei dem in Fig. 3 dargestellten Ausführungsbeispiel sind die Viertelwellenplatte 30 und der Polarisator 31 diskret aufgebaute Bauelemente. Die Kombination eines unter 45° zu einem Polarisator ausgerichteten "Viertelwellenplättchens" ist auch als Folie erhältlich und hier durchaus zum Einsatz kommen.

In Fig. 4 ist ein weiteres Ausführungsbeispiel schematisch dargestellt, wobei eine in der Praxis sicherlich vorteilhafte Halterung für die optischen Komponenten der Einfachkeit halber nicht näher dargestellt ist. Das in Fig. 4 dargestellte Ausführungsbeispiel weist eine als Sammellinse 36′ ausgebildete Einrichtung zur Ausweitung des aus der Lichtleitfaser 5a stammenden Laserlichtstrahls auf. Auf diese Sammellinse 36′ folgen zwei dicht nebeneinanderliegende Polarisatoren 40 und 41, deren Polarisationsrichtungen aufeinander senkrecht stehen. Der linke Polarisator 40 wird auf der Fläche 40a und der rechte Polarisator 41 auf der Fläche 41a vom Lichtstrahl erfaßt und durchlaufen. Hinter den beiden Polarisatoren 40 und 41 ist ein unter 45° zu diesen beiden Polarisatoren 40 und 41 ausgerichteter Polarisator 42 angeordnet, auf den eine Sammellinse 38′ folgt, die die beiden Teilstrahlen (linke Strahlhälfte, die durch den Polarisator 40 gelaufen ist, und rechte Strahlhälfte, die durch den Polarisator 41 gelaufen ist) gemeinsam in die zum Strahlteiler 7 führende Lichtleitfaser 26 einkoppelt. Um bei der Zusammenführung der beiden Teilstrahlen (gemeinsame Einkopplung in die Lichtleitfaser 26) eine vollständige destruktive Interferenz bei bestimmten Eingangspolarisationen in die Polarisiereinrichtung zu vermeiden, kann vorgesehen sein, daß der ausgeweitete Laserlichtstrahl die beiden senkrecht aufeinanderstehenden Polarisatoren - anders als in Fig. 4 dargestellt - auf verschieden großen Flächen 40a bzw. 41a erfaßt. Es ist aber auch möglich, eine der beiden Teilstrahlen teilweise abzuschwächen, oder im Strahlengang ein parallel zum Polarisator 40 oder zum Polarisator 41 ausgerichtetes elektrooptisches Plättchen vorzusehen, das beispielsweise in Abhängigkeit von der Ausgangsintensität aus der Polarisiereinrichtung geregelt ist.

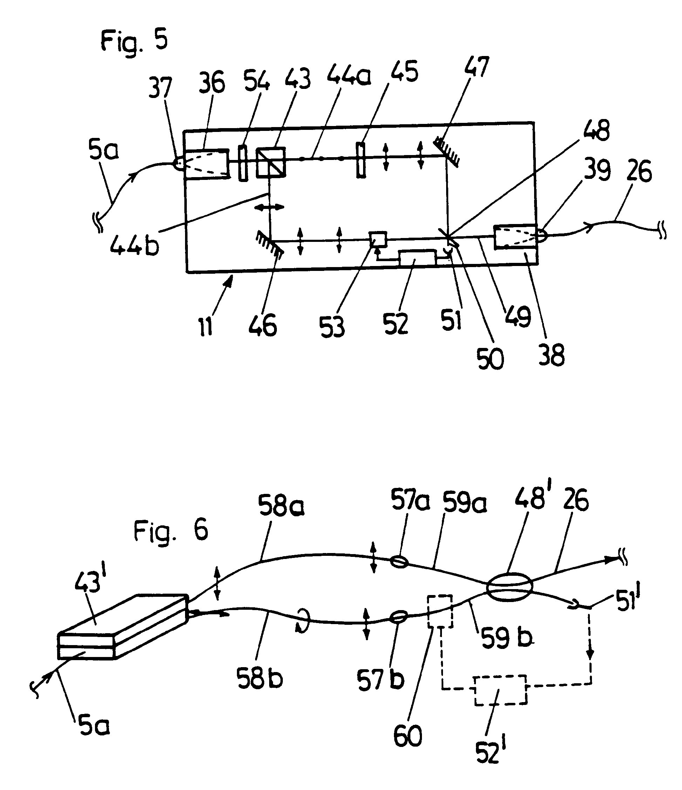

In Fig. 5 ist ein weiteres Ausführungsbeispiel einer erfindungsgemäßen Polarisiereinrichtung in einer Draufsicht schematisch dargestellt. Der von der Kollimationslinse 36 ausgeweitete Lichtstrahl gelangt auf einen Polarisationsstrahlteiler 43, der das Licht in einen senkrecht zur Zeichenebene linear polarisierten Teilstrahl 44a und einen in der Zeichenebene linear polarisierten Teilstrahl 44b aufteilt. Eine Halbwellenplatte 45 fungiert als Polarisationsdreheinrichtung, die die Polarisationsrichtung des Teilstrahls 44a um 90° dreht, sodaß dieser nunmehr parallel zum Teilstrahl 44b polarisiert ist. Über Umlenkspiegel 46 und 47 gelangen die beiden Teilstrahlen, die nun in derselben Richtung polarisiert sind, auf die als Strahlteiler ausgebildete Rekombinationseinrichtung 48, an der die beiden Teilstrahlen rekombiniert werden. Ein Leistungsverlust wird dann vermieden, wenn die beiden Teilstrahlen im Hauptausgang 49 konstruktiv und im Nebenausgang 50 destruktiv interferieren. Dies kann man mittels einer Regelung erzielen, die den Gangunterschied bzw. den optischen Weglängenunterschied beider Teilstrahlen regelt. Die Regelung erfolgt bei dem in Fig. 5 dargestellten Ausführungsbeispiel indirekt in Abhängigkeit von der Intensität des linear polarisierten Laserlichts am Hauptausgang. Über einen Photodetektor 51 wird die Intensität des Nebenausganges 50 erfaßt und das Meßsignal einer Regeleinrichtung 52 zugeführt.
Diese Regeleinrichtung steuert ein im Strahlengang des Teilstrahles 44b angeordnetes elektrooptisches Element 53, das die optische Weglänge für diesen Teilstrahl verändert, derart, daß die Intensität am Nebenausgang 50 minimal ist. Damit ist sichergestellt, daß die Intensität am komplementären Hauptausgang 49 maximal ist. Vor dem Polarisationsstrahlteiler ist noch eine Viertelwellenplatte 54 vorgesehen. Durch diese Viertelwellenplatte erzielt man bei einer linearen Eingangspolarisation, daß die Intensität der beiden Teilstrahlen 44a und 44b gleich ist, womit diese am Nebenausgang 50 vollständig destruktiv interferieren können, womit am Hauptausgang die maximale Intensität zur Verfügung steht. Um auch bei bestimmten zirkularen Polarisationen eine gleichmäßige Intensitätsaufteilung auf beide Teilstrahlen zu erzielen, kann die Viertelwellenplatte gegebenenfalls auch verdrehbar bzw. aus dem Strahlengang heraus bewegbar ausgebildet sein.

Die erfindungsgemäße Polarisiereinrichtung läßt sich auch mit rein faseroptischen Komponenten realisieren, wobei das Licht in der Polarisiereinrichtung ständig in Lichtwellenleitern, vorzugsweise Lichtleitfasern geführt ist. Bei der faseroptischen Realisierung entfällt günstigerweise die gegenseitige Justierung der optischen Elemente. Bei der in Fig. 6 gezeigten Ausführungsform ist ein faseroptischer Polarisationsstrahlteiler 43′ vorgesehen, der das über die Lichtleitfaser 5a herangeführte Laserlicht in zwei Teilstrahlen aufteilt, die senkrecht aufeinander linear polarisiert sind. Diese beiden Teilstrahlen werden in den beiden polarisationserhaltenden Fasern 58a und 58b geführt. Die Lichtleitfaser 58b ist derart verdreht, daß die beiden zunächst senkrecht aufeinander polarisierten Teilstrahlen anschließend parallel zueinander polarisiert sind. über Anschlußstellen (Spleiss-Stellen 57a und 57b) sind die polarisationserhaltenden Lichtleitfasern 58a und 58b an die zum 2x2-Richtungskoppler 48′ führenden Lichtleitfasern 59a bzw. 59b angeschlossen. Der 2x2-Richtungskoppler 48′ dient als Rekombinationseinrichtung und weist einen zur Lichtleitfaser 26 führenden Hauptausgang und einen zur Fotodiode 51′ führenden Nebenausgang auf. Um zu garantieren, daß die beiden Teilstrahlen im Faserkoppler 48′ konstruktiv interferieren (Interferenzminimum an der Fotodiode 51′) muß die relative optische Phase in den beiden Teilstrahl-Armen auf den richtigen Wert getrimmt werden. Dies kann beispielsweise durch Drücken auf die Faser 59b geschehen. Wenn die Fotodiode 51′ am Nebenausgang der 2x2-Richtkopplers 48′ über eine Regeleinrichtung 52′ und einen Piezokristall 60 den aufgebrachten Druck und damit den relativen Gangunterschied zwischen den beiden Teilstrahlen regelt, kann man eine aktiv geregelte Polarisiereinrichtung erhalten, die unabhängig von der Eingangspolarisation auf der Ausgangs-Lichtleitfaser 26 eine definierte lineare Polarisation des Laserlichtes sicherstellt, wobei das Laserlicht immer die maximale Intensität aufweist (Regelung auf eine minimale Intensität bei der Fotodiode 51′).

Die Erfindung ist selbstverständlich nicht auf die dargestellten Ausführungsbeispiele beschränkt. Beispielsweise können auch polarisationsselektive Spiegel oder andere polarisationsselektive Bauelemente zum Einsatz kommen. Auch der Aufbau des eigentlichen Interferometers ist hier nicht von erfindungswesentlicher Bedeutung. Beispielsweise kann das Interferometer mehrere Referenzzweige, die von jeweils einem Strahlteiler ausgehen und in eigenen Rekombinationseinrichtungen mit Teilen des von der Meßstrecke zurückkehrenden Meßstrahles rekombiniert werden, aufweisen. Wesentlich ist, daß eine Polarisiereinrichtung vorgesehen ist, die am Eingang des eigentlichen Interferometers eine definierte, vorzugsweise lineare Polarisation des Laserlichts festlegt. Zur Zufuhr des Laserlichts von der Laserlichtquelle sind durchaus auch andere Lichtleitfasern als monomode Glasfasern denkbar und möglich.

Eine besondere Ausführungsform ist in Fig. 7 dargestellt, in der gleiche Bezugsziffern gleiche bzw. äquivalente Teile bezeichnen wie in Fig. 1. Der wesentliche Unterschied zu dem in Fig. 1 dargestellten Ausführungsbeispiel besteht in der Verwendung einer polarisationserhaltenden Zufuhr-Lichtleitfaser 5′. Die allgemein mit 11 bezeichnete Polarisiereinrichtung ist ein einfacher Polarisator 65. Bei dieser Ausführungsform braucht die beispielsweise lineare Polarisation am Ausgang der polarisationserhaltenden Faser 5′ nur ungefähr festzuliegen, was sich mit geringem Justieraufwand erreichen läßt. Die exakt definierte Polarisation vor dem Strahlteiler 7 legt dann der Polarisator 65 fest, der beispielsweise ein einfacher linearer Polarisator sein kann. Die polarisationserhaltende Faser 5′ stellt sicher, daß das dem Polarisator 65 zugeführte Licht jedenfalls eine ausreichende Komponente in der Polarisationseinrichtung des Polarisators 65 aufweist, damit dieser in jedem Fall Licht durchläßt. Beispielsweise ist es durchaus ausreichend, wenn die lineare Polarisationsrichtung am Ausgang der Faser 5′ auf ±20° bezüglich der Polarisationsrichtung des Polarisators 65 festliegt, um nach dem Polarisator 65 noch einen Großteil der auf ihn auftreffenden Lichtintensität mit exakt definierter Polarisation zu haben. Die Lichtleitfaser 5a im Interferometerkopf kann polarisationserhaltend sein. Es ist aber durch starre Verbindung einer normalen monomoden Faser mit dem Interferometerkopf auch möglich, dem Polarisator 65 - ausgehend vom Ausgang der polarisationserhaltenden Faser 5′ - Licht mit ausreichend genauer Polarisationsrichtung zuzuführen.

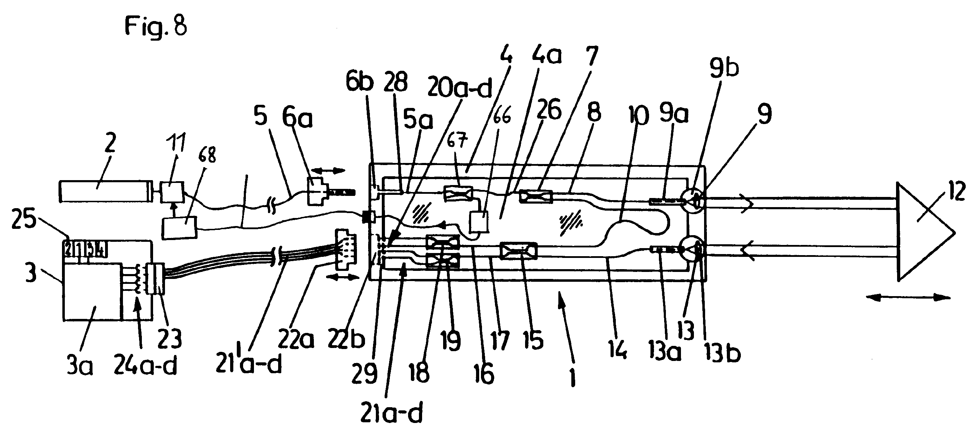

Neben den oben beschriebenen Ausführungsbeispielen, bei denen die Polarisiereinrichtung zwischen dem interferometerseitigen Ende der flexiblen Lichtleitfaser und dem Strahlteiler angeordnet ist, gibt es auch noch eine alternative Möglichkeit der Anordnung der Polarisiereinrichtung, welche in Fig. 8 dargestellt ist. Gemäß dieser weiteren Variante der Erfindung ist nämlich vorgesehen, daß die Polarisiereinrichtung 11 vor dem lichtquellenseitigen Ende der flexiblen Lichtleitfaser 5 zur Laserlichtzufuhr angeordnet ist, daß nach der bzw. den flexiblen Lichtleitfasern und vorzugsweise in der Nähe des Strahlteilers 7 eine Einrichtung 66 zur Erfassung des Polarisationszustandes des Laserlichtes angeordnet ist und daß die im Polarisationszustand des austretenden Lichtes regelbare Polarisiereinrichtung 11 über die Regeleinrichtung 68 in Abhängigkeit vom erfaßten Polarisationszustand derart geregelt ist, daß ständig Laserlicht einer vorbestimmten, vorzugsweise linearen Polarisation an den Eingang des Strahlteilers 7 gelangt. Vor dem Strahlteiler 7 des Interferometers kann ein Hilfsstrahlteiler 67 angeordnet sein, der einen Teil des Laserlichts zur Polarisationserfassungseinrichtung 66 abzweigt. Eine elektrische Leitung 69 verbindet den Ausgang der Einrichtung 66 mit dem Eingang der Regeleinrichtung 68. Die im Polarisationszustand des austretenden Lichtes regelbare Polarisationseinrichtung 11 weist vorteilhafte elektrooptische und/oder mechanisch verstellbare Elemente zur Veränderung des Polarisationszustandes des austretenden Laserlichtes auf. Solche Einrichtungen zur Regelung der Ausgangspolarisation sind dem Fachmann ebenso bekannt wie Einrichtungen zur Erfassung des Polarisationszustandes, weshalb diese Einrichtungen hier nicht im Detail beschrieben werden. Wegen des komplexeren Aufbaus und der erforderlichen aktiven Regelung wird allerdings die soeben beschriebene Ausführungsform in der Praxis sicherlich nur in Spezialfällen zum Einsatz kommen. In solchen Spezialfällen kann diese Ausführungsform jedoch durchaus vorteilhaft sein.

## Patentansprüche

1. Interferometer zur Lage- bzw. Verschiebewegbestimmung eines beweglichen Meßspiegels (12)
- mit einem Interferometerkopf (1), mit dessen Gehäuse (4) oder Träger ein Strahlteiler (7) zur Aufteilung des Laserlichts in einen Meßstrahl und einen Referenzstrahl sowie eine Rekombinationseinrichtung (15) starr in Verbindung stehen, wobei der über den beweglichen Meßspiegel (12) geführte Meßstrahl und der über eine feste Referenzstrecke geführte Referenzstrahl in der Rekombinationseinrichtung (15) unter Bildung mindestens eines optischen Interferenzsignales interferieren,
- mit einer außerhalb des Interferometerkopfs (1) angeordneten Laserfichtquelle (2), wobei zwischen Laserlichtquelle (2) und dem Strahlteiler (7) des Interferometerkopfes (1) zumindest eine flexible Lichtleitfaser (5,5a) zur Laserlichtzufuhr angeordnet ist, und
- mit einer photoelektrischen Detektoreinrichtung (3) zur Auswertung der bzw. des aus der Rekombinationseinrichtung (15) stammenden Interferenzsignale(s),
dadurch gekennzeichnet,
daß nach der bzw. den flexiblen Lichtleitfaser(n) (5,5a) zur Laserlichtzufuhr und vor dem Strahlteiler (7) eine mit dem Interferometerkopf-Gehäuse oder -Träger (1 bzw. 4) in Verbindung stehende Polarisiereinrichtung (11) zur Festlegung einer definierten, vorzugsweise linearen Polarisation des Laserlichtes am Eingang des Strahlteilers (7) angeordnet ist.

2. Interferometer nach Anspruch 1, dadurch gekennzeichnet, daß am Eingang der Polarisiereinrichtung eine Kollimationslinse (36,36′) angeordnet ist, die den aus der flexiblen Lichtleitfaser (5) bzw. einer daran angeschlossenen Faser (5a) austretenden Lichtstrahl kollimiert.

3. Interferometer nach Anspruch 1 oder 2, dadurch gekennzeichnet, daß im Gehäuse bzw. am Träger des Interferometerkopfes (1) zwischen der Polarisiereinrichtung (11) und dem vorzugsweise als Faserkoppler ausgebildeten Strahlteiler (7) ein Lichtwellenleiter, vorzugsweise eine flexible Lichtleitfaser (26) angeordnet ist, in den bzw. die das vorzugsweise linear polarisierte Laserlicht am Ausgang der Polarisiereinrichtung (11) über eine Einkoppellinse (38,38′) eingekoppelt wird.

4. Interferometer nach Anspruch 2 oder 3, dadurch gekennzeichnet, daß die Kollimationslinse (36,36′) und/oder die Einkoppellinse (38,38′) eine Gradientenindexlinse mit vorzugsweise zylindrischen Außenabmessungen ist.

5. Interferometer nach Anspruch 4, dadurch gekennzeichnet, daß die Lichtleitfasern (5a,26) an die Gradientenindexlinse (36,36′,38 bzw. 38′) zentrisch oder exzentrisch angeklebt ist.

6. Interferometer nach einem der Ansprüche 1 bis 5, dadurch gekennzeichnet, daß die optischen Elemente (30,31,36,38) der Polarisiereinrichtung (11) in einer mechanischen Halterung (35) einstellbar oder starr gehalten sind.

7. Interferometer nach Anspruch 6, dadurch gekennzeichnet, daß die beispielsweise als Rohr (35) ausgebildete Halterung mindestens eine zylindrische Bohrung aufweist, in die die optischen Elemente (30,31,36,38) eingesetzt sind.

8. Interferometer nach einem der Ansprüche 1 bis 7, dadurch gekennzeichnet, daß auch die photoelektrische Auswerteinrichtung (3) in an sich bekannter Weise außerhalb des Interferometerkopfes (1 bzw. 4) liegt und über flexible Ausgangs-Lichtleitfasern (21′a-d) die optischen Interferenzsignale erhält.

9. Interferometer nach einem der Ansprüche 1 bis 8, dadurch gekennzeichnet, daß zumindest ein optisches Interferenzsignal aus der Rekombinationseinrichtung (15) in zwei phasenverschobene Anteile zerlegt und jeder Anteil über einen Polarisationsfilter (20a-d) geführt ist, wobei die Achsen der beiden Polarisationsfilter (20a-d) aufeinander senkrecht und unter 45 Grad zu jener linearen Polarisationsrichtung stehen, die durch die Polarisiereinrichtung (11) am Eingang des Strahlteilers (7) definiert ist.

10. Interferometer nach Anspruch 8 und 9, dadurch gekennzeichnet, daß die Polarisationsfilter (20a-d) im Interferometerkopf (1 bzw. 4) angeordnet sind.

11. Interferometer nach einem der Ansprüche 1 bis 10, dadurch gekennzeichnet, daß die Polarisiereinrichtung (11) unabhängig vom vorzugsweise linearen Polarisationszustand des Laserlichtes an ihrem Eingang immer Licht durchläßt und das Licht am Ausgang der Polarisiereinrichtung (11) eine definierte, vorzugsweise lineare Polarisation aufweist.

12. Interferometer nach Anspruch 11, dadurch gekennzeichnet, daß die Intensität des aus der Polarisiereinrichtung (11) vorzugsweise linear polarisiert austretenden Laserlichtes zumindest dann, wenn das Laserlicht am Eingang der Polarisiereinrichtung (11) linear polarisiert ist, von der Polarisation des Laserlichtes am Eingang der Polarisiereinrichtung (11) unabhängig ist.

13. Interferometer nach einem der Ansprüche 1 bis 12, dadurch gekennzeichnet, daß die Polarisiereinrichtung (11) eine Viertelwellenplatte (30) und einen dieser nachgeschalteten Polarisator (31) aufweist, deren Achsen unter 45 Grad zueinander stehen.

14. Interferometer nach Anspruch 2, 3 und Anspruch 13, dadurch gekennzeichnet, daß die Polarisiereinrichtung (11) - in Lichtdurchgangsrichtung gesehen - eine eingangsseitige Kollimationslinse (36), eine Viertelwellenplatte (30), einen Polarisator (31) und eine ausgangsseitige Einkoppellinse (38) zur Lichteinkopplung in einem zum Strahlteiler (7) führenden Lichtwellenleiter (26) aufweist.

15. Interferometer nach einem der Ansprüche 1 bis 12, dadurch gekennzeichnet, daß die Polarisiereinrichtung (11) eine Einrichtung (36′) zur Aufweitung oder Aufteilung des aus der flexiblen Lichtleitfaser (5) bzw. einer daran angeschlossenen Faser (5′) stammenden Laserlichtstrahles aufweist, daß die Polarisiereinrichtung (11) zwei Polarisationen (40,41) mit aufeinander senkrecht stehenden Polarisationsrichtungen aufweist, die je von einem Teilstrahl durchlaufen werden, daß hinter diesen Polarisatoren (40,41) weiters wenigstens ein unter 45 Grad zu den beiden genannten Polarisatoren (40,41) ausgerichteter Polarisator (42) vorgesehen ist, durch den die beiden Teilstrahler laufen und daß schließlich eine Einrichtung (38′) vorgesehen ist, um die beiden Teilstrahlen nach Durchlaufen der genannten Polarisatoren (40,41,42) zusammenzuführen.

16. Interferometer nach Anspruch 2,3 und Anspruch 15, dadurch gekennzeichnet, daß die Polarisiereinrichtung (11) - in Lichtdurchgangsrichtung gesehen - aufweist:
- eine eingangsseitige Kollimationslinse (36′), die den Laserlichtstrahl kollimiert,
- zwei dichtbenachbart nebeneinanderliegende und vom aufgeweiteten Laserlichtstrahl erfaßte Polarisatoren (40,41) mit zueinander senkrechter Ausrichtung,
- einen dahinterliegenden, unter 45 Grad zu den beiden genannten Polarisatoren (40,41) ausgerichteten Polarisator (42) und
- eine ausgangsseitige Einkoppellinse (38′) zur Einkopplung des aufgeweiteten Laserlichtstrahles in einem zum Strahlteiler (7) führenden Wellenleiter (26).

17. Interferometer nach Anspruch 15 und 16, dadurch gekennzeichnet, daß die beiden Teilstrahlen bei ihrer Rekombination eine unterschiedliche Intensität aufweisen.

18. Interferometer nach Anspruch 16 und 17, dadurch gekennzeichnet, daß der aufgeweitete Laserlichtstrahl die beiden senkrecht aufeinander stehenden Polarisatoren (40, 41) auf verschieden großen Flächen erfaßt.

19. Interferometer nach einem der Ansprüche 1 bis 12, dadurch gekennzeichnet, daß die Polarisiereinrichtung eine Aufteileinrichtung (43) zur Aufteilung des ankommenden Laserlichtes in zwei senkrecht aufeinander linear polarisierte Teilstrahlen (44a,b) aufweist, daß weiters eine Polarisationsdreheinrichtung (45) zur Drehung der Polarisationsrichtung wenigstens einer der beiden Teilstrahlen (44b) vorgesehen ist, und daß ausgangsseitig eine Rekombinationseinrichtung (48) vorgesehen ist, in der die in ihrer linearen Polarisationsrichtung durch die Polarisationsdreheinrichtung zueinander parallel gedrehten Teilstrahlen (44a,b) überlagert werden.

20. Interferometer nach Anspruch 19, dadurch gekennzeichnet, daß die Aufteileinrichtung ein Polarisationsstrahlteiler (43) ist.

21. Interferometer nach Anspruch 19 oder 20, dadurch gekennzeichnet, daß die Polarisationsdreheinrichtung eine in einem der beiden Teilstrahler (44b) angeordnete Halbwellenplatte (45) ist.

22. Interferometer nach einem der Ansprüche 19 bis 21, dadurch gekennzeichnet, daß die Rekombinationseinrichtung ein Strahlteiler (48) bzw. halbdurchlässiger Spiegel ist.

23. Interferometer nach einem der Ansprüche 15 bis 22, dadurch gekennzeichnet, daß die Polarisiereinrichtung (11) eine Einrichtung (53) zur Einstellung des Gangunterschiedes zwischen den beiden Teilstrahlen (44a,b) vor bzw. bei deren Rekombination aufweist.

24. Interferometer nach Anspruch 23, dadurch gekennzeichnet, daß die Einrichtung zur Einstellung des Gangunterschiedes zumindest in einem der beiden Teilstrahlen ein elektrooptisches Element (53) oder ein den geometrischen Weglängenunterschied für beide Teilstrahlen veränderndes piezoelektrisches Element aufweist.

25. Interferometer nach Anspruch 23 oder 24, dadurch gekennzeichnet, daß eine Regeleinrichtung (52,52′) zur Regelung des Gangunterschiedes der beiden Teilstrahler (44a,b) in Abhängigkeit von der Intensität des linear polarisierten Laserlichtes am Ausgang der Polarisiereinrichtung (11) vorgesehen ist.

26. Interferometer nach einem der Ansprüche 19 bis 25, dadurch gekennzeichnet, daß vor der Aufteileinrichtung (Polarisationsstrahlteiler 43) eine Viertelwellenplatte (54) angeordnet ist, die vorzugsweise um die Lichtstrahlrichtung verdrehbar und/oder aus dem Strahlengang schwenkbar ist.

27. Interferometer nach einem der Ansprüche 1 bis 26, dadurch gekennzeichnet, daß die Laserlicht-Zufuhrlichtleitfaser eine polarisationserhaltende Lichtleitfaser (5′) ist.

28. Interferometer nach Anspruch 27, dadurch gekennzeichnet, daß die Polarisiereinrichtung (11) durch einen einzigen linearen Polarisator (65) gebildet ist.

29. Interferometer zur Lage- bzw. Verschiebewegbestimmung eines beweglichen Meßspiegels (12)
- mit einem Interferometerkopf (1), mit dessen Gehäuse (4) oder Träger ein Strahlteiler (7) Aufteilung des Laserlichts in einen Meßstrahl und einen Referenzstrahl sowie eine Rekombinationseinrichtung (15) starr in Verbindung stehen, wobei der über den beweglichen Meßspiegel (12) geführte Meßstrahl und der über eine feste Referenzstrecke geführte Referenzstrahl in der Rekombinationseinrichtung (15) unter Bildung mindestens eines optischen Interferenzsignales interferieren,
- mit einer außerhalb des Interferometerkopfs (1) angeordneten Laserlichtquelle (2), wobei zwischen Laserlichtquelle (2) und dem Strahlteiler (7) des Interferometerkopfes (1) zumindest eine flexible Lichtleitfaser (5,5a) zur Laserlichtzufuhr angeordnet ist, und
- mit einer photoelektrischen Detektoreinrichtung (3) zur Auswertung der bzw. des aus der Rekombinationseinrichtung (15) stammenden Interferenzsignale(s),
dadurch gekennzeichnet,
daß vor dem lichtquellenseitigen Ende der flexiblen Lichtleitfaser(n) (5,5a) zur Laserlichtzufuhr in an sich bekannter Weise eine Polarisiereinrichtung (11) angeordnet ist, daß nach der bzw. den flexiblen Lichtleitfasern (5,5a) vorzugsweise in der Nähe des Strahlteilers (7) eine Einrichtung (66) zur Erfassung des Polarisationszustandes des Laserlichtes angeordnet ist, und daß die bezüglich des Polarisationszustandes des austretenden Lichtes regelbare Polarisiereinrichtung (11) in Abhängigkeit vom erfaßten Polarisationszustand derart geregelt ist, daß ständig Laserlicht einer vorbestimmten, vorzugsweise linearen Polarisation an den Eingang des Strahlteilers (7) gelangt.

30. Interferometer nach Anspruch 29, dadurch gekennzeichnet, daß vor dem Strahlteiler ein Hilfsstrahlteiler angeordnet ist, der einen Teil des Laserlichtes zur Polarisationserfassungseinrichtung abzweigt.

31. Interferometer nach Anspruch 29 oder 30, dadurch gekennzeichnet, daß die Polarisiereinrichtung elektrooptische Elemente und/oder mechanisch verstellbare Elemente zur Veränderung des Polarisationszustandes des austretenden Lichtes aufweist.

32. Interferometer nach einem der Ansprüche 1 bis 31, dadurch gekennzeichnet, daß das Laserlicht in der Polarisiereinrichtung ständig in Lichtwellenleitern (in 43′;58a,b;59a,b;in 48′), vorzugsweise Lichtleitfasern geführt ist.

33. Interferometer nach Anspruch 19 und 32, dadurch gekennzeichnet, daß die beiden Teilstrahlen nach der Aufteileinrichtung (43′) in jeweils einer polarisationserhaltenden Lichtleitfaser (58a,58b) geführt sind, wobei die diese Lichtleitfasern (58a,58b) so gegeneinander verdreht sind, daß die ursprünglich senkrecht zueinander polarisierten Teilstrahlen bei ihrer Rekombination in der Rekombinationseinrichtung (48′) zueinander parallel polarisiert sind.

34. Interferometer nach Anspruch 33, dadurch gekennzeichnet, daß zur Einstellung des relativen Gangunterschiedes zwischen den beiden Teilstrahlen ein mechanischer Druck, beispielsweise über ein piezoelektrisches Element (60), auf zumindest eine der Lichtleitfasern (59b) ausgeübt wird, in der die Teilstrahler geführt sind.

## Claims

1. Interferometer for determining the position or displacement travel of a movable measuring mirror (12), comprising:
- an interferometer head (1) to whose housing (4) or carrier are rigidly connected a beam divider (7) for dividing the laser light into a measuring beam and a reference beam, and a recombination device (15), wherein the measuring beam which is passed by way of the movable measuring mirror (12) and the reference beam which is passed by way of a fixed reference section interfere in the recombination device (15), forming at least one optical interference signal,
- a laser light source (2) arranged outside the interferometer head (1), at least one flexible optical fiber (5, 5a) for the laser light feed being arranged between the laser light source (2) and the beam divider (7) of the interferometer head (1), and
- a photoelectric detector device (3) for evaluation of the interference signal or signals coming from the recombination device (15),
characterised in that
arranged downstream of the flexible optical fiber or fibers (5, 5a) for the laser light feed and upstream of the beam divider (7) is a polarisation means (11) which is rigidly connected to the interferometer head housing or carrier (1 or 4) for fixing a defined, preferalby linear polarisation of the laser light at the entrance of the beam divider (7).

2. Interferometer as set forth in claim 1, characterised in that disposed at the entrance of the polarisation means is a collimation lens (36, 36′) for collimating the light beam issuing from the flexible optical fiber (5) or a fiber (5a) connected thereto.

3. Interferometer as set forth in claim 1 or 2, characterised in that disposed in the housing or on the carrier of the interferometer head (1) between the polarisation means (11) and the beam divider (7) which is preferably in the form of a fiber coupler is a light waveguide, preferably a flexible optical fiber (26), into which the preferably linearly polarised laser light at the output of the polarisation means (11) is coupled by way of a coupling-in lens (38, 38′).

4. Interferometer as set forth in claim 2 or claim 3, characterised in that the collimation lens (36, 36′) and/or the coupling-in lens (38, 38′) is a gradient index lens with preferably cylindrical external dimensions.

5. Interferometer as set forth in claim 4, characterised in that the optical fibers (5a, 26) are glued centrally or eccentrically to the gradient index lens (36, 36′, 38 or 38′ respectively).

6. Interferometer as set forth in one of claims 1 through 5, characterised in that the optical elements (30, 31, 36, 38) of the polarisation means (11) are held adjustably or rigidly in a mechanical holder (35).

7. Interferometer as set forth in claim 6, characterised in that the holder which is for example in the form of a tube (35) has at least one cylindical bore into which the optical elements (30, 31, 36, 38) are fitted.

8. Interferometer as set forth in one of claims 1 through 7, characterised in that the photoelectric evaluation device (3) is also disposed in per se known manner outside the interferometer head (1 or 4) and receives the optical interference signals by way of flexible output optical fibers (21′a-d).

9. Interferometer as set forth in one of claims 1 through 8, characterised in that at least one optical inteference signal from the recombination device (15) is divided into two phase-shifted components and each component is guided by way of a polarisation filter (20a-d), wherein the axes of the two polarisation filters (20a-d) are disposed perpendicularly to each other and at 45 degrees to that linear polarisation direction which is defined by the polarisation means (11) at the entrance of the beam divider (7).

10. Interferometer as set forth in claims 8 and 9, characterised in that the polarisation filters (20a-d) are disposed in the interferometer head (1 or 4).

11. Interferometer as set forth in one of claims 1 through 10, characterised in that the polarisation means (11) always transmits light independently of the preferably linear polarisation condition of the laser light at its input and the light at the output of the polarisation means (11) is of a defined, preferably linear polarisation.

12. Interferometer as set forth in claim 11, characterised in that the intensity of the laser light issuing from the polarisation means (11) preferably in linearly polarised form is independent of the polarisation of the laser light at the input of the polarisation means (11), at least when the laser light is linearly polarised at the input of the polarisation means (11).

13. Interferometer as set forth in one of claims 1 through 12, characterised in that the polarisation means (11) comprises a quarterwave plate (30) and a polariser (31) disposed downstream thereof, their axles being at 45 degrees relative to each other.

14. Interferometer as set forth in claims 2, 3 and claim 13, characterised in that the polarisation means (11) - as viewed in the direction of light transmission - has a collimation lens (36) at the input side, a quarter-wave plate (30), a polariser (31) and a coupling-in lens (38) at the output side for coupling light into a light wave guide (26) leading to the beam divider (7).

15. Interferometer as set forth in one of claims 1 through 12, characterised in that the polarisation means (11) has a device (36′) for expanding or dividing the laser light beam coming from the flexible optical fiber (5) or a fiber (5′) connected thereto, that the polarisation means (11) comprises two polarisers (40, 41) with mutually perpendicular polarisation directions, through each of which passes a respective beam portion, that disposed downstream of said polarisers (40, 41) there is also at least one polariser (42) which is oriented at 45 degrees relative to said two polarisers (40, 41) and through which the two beam portions pass, and that finally there is provided a device (38′) for bringing the two beam portions together after having passed through said polarisers (40, 41, 42).

16. Interferometer as set forth in claims 2, 3 and claim 15, characterised in that the polarisation means (11) - as viewed in the direction of light transmission - comprises:
- a collimation lens (36′) at the input side, which collimates the laser light beam,
- two polarisers (40, 41) of mutually perpendicular orientation, which are disposed in closely adjacent juxtaposed relationship and which receive the expanded laser light beam,
- a polariser (42) which is disposed downstream of the two said polarisers (40, 41) and which is oriented at 45 degrees relative thereto, and
- a coupling-in lens (38′) on the output side for coupling the expanded laser light beam into a waveguide (26) leading to the beam divider (7).

17. Interferometer as set forth in claims 15 and 16, characterised in that the two beam portions are of different intensities upon recombination thereof.

18. Interferometer as set forth in claims 16 and 17, characterised in that the expanded laser light beam acts on the two mutually perpendicularly disposed polarisers (40, 41) at surface areas of different sizes.

19. Interferometer as set forth in one of claims 1 through 12, characterised in that the polarisation means has a dividing means (43) for dividing the incoming laser light into two beam portions (44a, b) which are linearly polarised in mutually perpendicular relationship, that there is further provided a polarisation turning means (45) for turning the direction of polarisation of at least one of the two beam portions (44b), and that provided on the output side is a recombination device (48) in which the beam portions (44a, b) which are turned in mutually parallel relationship in terms of their linear polarisation direction by the polarisation turning means are superimposed.

20. Interferometer as set forth in claim 19 characterised in that the dividing means is a polarisation beam divider (43).

21. Interferometer as set forth in claim 19 or 20, characterised in that the polarisation turning means is a half-wave plate (45) disposed in one of the two beam portions (44b).

22. Interferometer as set forth in one of claims 19 through 21, characterised in that the recombination device is a beam divider (48) or semi-transparent mirror.

23. Interferometer as set forth in one of claims 15 through 22, characterised in that the polarisation means (11) has a device (53) for adjusting the phase difference between the two beam portions (44a, b) prior to or upon recombination thereof.

24. Interferometer as set forth in claim 23, characterised in that the device for adjusting the phase, at least in one of the two beam portions, comprises an electro-optical element (53) or a piezoelectric element for varying the geometrical travel length difference for both beam portions.

25. Interferometer as set forth in claim 23 or 24, characterised in that there is provided a regulation device (52, 52′) for regulating the phase difference of the two beam portions (44a, b) in dependence on the intensity of the linearly polarised laser light at the output of the polarisation means (11).

26. Interferometer as set forth in one of claims 19 through 25, characterised in that disposed upstream of the dividing means (polarisation beam divider 43) is a quarter-wave plate (54) which is preferably rotatable about the light beam direction and/or pivotable out of the beam path.

27. Interferometer as set forth in one of claims 1 through 26, characterised in that the laser light feed optical fiber is a polarisation-maintaining optical fiber (5′).

28. Interferometer as set forth in claim 27, characterised in that the polarisation means (11) is formed by a single linear polariser (65).

29. Interferometer for determining the position or displacement travel of a movable measuring mirror (12), comprising:
- an interferometer head (1) to whose housing (4) or carrier are rigidly connected a beam divider (7) for dividing the laser light into a measuring beam and a reference beam, and a recombination device (15), wherein the measuring beam which is passed by way of the movable measuring mirror (12) like and the reference beam which is passed by way of a fixed reference section interfere in the recombination device (15), forming at least one optical interference signal,
- a laser light source (2) arranged outside the interferometer head (1), at least one flexible optical fiber (5, 5a) for the laser light feed being arranged between the laser light source (2) and the beam divider (7) of the interferometer head (1), and
- a photoelectric detector device (3) for evaluation of the interference signal or signals coming from the recombination device (15),
characterised in that
a polarisation means (11) is arranged in per se known manner upstream of the end, which is towards the light source, of the flexible optical fiber or fibers (5, 5a) for the laser light feed, that a device (66) for detecting the polarisation condition of the laser light is arranged downstream of the flexible optical fiber or fibers (5, 5a), preferably in the vicinity of the beam divider (7), and that the polarisation means (11) which is adapted to be regulated in terms of the polarisation condition of the issuing light is regulated in dependence on the detected polarisation condition in such a way that laser light of a predetermined preferably linear polarisation constantly goes to the entrance of the beam divider (7).

30. Interferometer as set forth in claim 29, characterised in that disposed upstream of the beam divider is an auxiliary beam divider which branches off a part of the laser light to the polarisation detection device.

31. Interferometer as set forth in claim 29 or 30, characterised in that the polarisation device has electro-optical elements and/or mechanically adjustable elements for varying the polarisation condition of the issuing light.

32. Interferometer as set forth in one of claims 1 through 31, characterised in that the laser light in the polarisation means is constantly guided in light waveguides (in 43′; 58a, b; 59a, b; in 48′), preferably optical fibers.

33. Interferometer as set forth in claims 19 and 32, characterised in that the two beam portions downstream of the dividing means (43′) are guided in a respective polarisation-maintaining optical fiber (58a, 58b), wherein said optical fibers (58a, 58b) are so turned relative to each other that the originally mutually perpendicularly polarised beam portions are polarised in mutually parallel relationship upon recombination thereof in the recombination device (48′).

34. Interferometer as set forth in claim 33, characterised in that a mechanical pressure is applied, for example by way of a piezoelectric element (60), to at least one of the optical fibers (59b) in which the beam portions are carried for adjusting the relative phase difference between the two beam portions.

## Revendications

1. Interféromètre pour déterminer la position et le déplacement d'un miroir de mesure mobile (12)
- comportant une tête d'interféromètre (1) au boîtier (4) ou support, de laquelle sont rigidement reliés un diviseur de faisceau (7) prévu pour diviser la lumière laser en un faisceau de mesure et en un faisceau de référence, ainsi qu'un dispositif de recombinaison (15), le faisceau de mesure, qui passe par le miroir de mesure mobile (12), et le faisceau de référence, qui passe par une voie de référence fixe, interférant dans le dispositif de recombinaison (15) en formant au moins un signal d'interférence optique,
- comportant une source de lumière laser (2) disposée à l'extérieur de la tête d'interféromètre (1), au moins une fibre optique flexible (5,5a) prévue pour amener la lumière laser étant disposée entre la source de lumière laser (2) et le diviseur de faisceau (7) de la tête d'interféromètre (1), et
- comportant un dispositif de détection photo-électrique (3) pour traiter le signal, ou les signaux, d'interférence provenant du dispositif de recombinaison (15),
caractérisé
par le fait qu'après la fibre optique flexible ou les fibres optiques flexibles (5,5a), prévue(s) pour amener la lumière laser et avant le diviseur de faisceau (7) est disposé un dispositif de polarisation (11) relié au boîtier ou au support (1 ou 4) de la tête d'interféromètre et prévu pour établir une polarisation définie, de préférence rectiligne, de la lumière laser à l'entrée du diviseur de faisceau (7).

2. Interféromètre selon la revendication 1, caractérisé par le fait qu'à l'entrée du dispositif de polarisation est disposée une lentille de collimation (36,36′) qui réalise la collimation du faisceau lumineux sortant de la fibre optique flexible (5) ou d'une fibre (5a) qui lui est reliée.

3. Interféromètre selon la revendication 1 ou 2, caractérisé par le fait que dans le boîtier ou sur le support de la tête d'interféromètre (1), entre le dispositif de polarisation (11) et le diviseur de faisceau (7), conçu de préférence sous forme de coupleur de fibres, est disposé un conducteur d'ondes lumineuses, de préférence une fibre optique flexible (26), dans lequel ou dans laquelle la lumière laser, de préférence à polarisation rectiligne, est couplée à la sortie du dispositif de polarisation (11) par l'intermédiaire d'une lentille de couplage (38,38′).

4. Interféromètre selon la revendication 2 ou 3, caractérisé par le fait que la lentille collimatrice (36,36′) et/ou la lentille de couplage (38,38′) est une lentille à gradient d'indice à dimensions extérieures de préférence cylindriques.

5. Interféromètre selon la revendication 4, caractérisé par le fait que les fibres optiques (5a,26) sont collées à la lentille à gradient d'indice (36,36′,38 ou 38′) en position centrée ou excentrée.

6. Interféromètre selon l'une des revendications 1 à 5, caractérisé par le fait que les éléments optiques (30,31,36,38) du dispositif de polarisation (11) sont maintenus, avec possibilité de réglage ou rigidement, dans une monture mécanique (35).

7. Interféromètre selon la revendication 6, caractérisé par le fait que la monture, conçue par exemple sous forme de tube (35), présente au moins un perçage cylindrique dans lequel sont insérés les éléments optiques (30,31,36,38).

8. Interféromètre selon l'une des revendications 1 à 7, caractérisé par le fait que le dispositif de traitement photo-électrique (3) se situe également, de façon connue en soi, à l'extérieur de la tête d'interféromètre (1 ou 4) et reçoit les signaux d'interférence optiques par l'intermédiaire de fibres optiques de sortie flexibles (21′a-d).

9. Interféromètre selon l'une des revendications 1 à 8, caractérisé par le fait qu'au moins un signal d'interférence optique provenant du dispositif de recombinaison (15) se décompose en deux composantes décalées en phase et que chaque composante est guidée à travers un filtre de polarisation (20a-d), les axes des deux filtres de polarisation (20a-d) étant perpendiculaires l'un à l'autre et faisant un angle de 45 degrés avec la direction de polarisation rectiligne définie par le dispositif de polarisation (11) qui se trouve à l'entrée du diviseur de faisceau (7).

10. Interféromètre selon les revendications 8 et 9, caractérisé par le fait que les filtres de polarisation (20a-d) sont disposés dans la tête d'interféromètre (1 ou 4).

11. Interféromètre selon l'une des revendications 1 à 10, caractérisé par le fait que le dispositif de polarisation (11) laisse toujours passer la lumière indépendamment de l'état de polarisation, de préférence rectiligne, de la lumière laser à son entrée et qu'à la sortie du dispositif de polarisation (11), la lumière présente une polarisation définie de préférence rectiligne.

12. Interféromètre selon la revendication 11, caractérisé par le fait que l'intensité de la lumière laser sortant, de préférence avec une polarisation rectiligne, du dispositif de polarisation (11) est indépendante de la polarisation de la lumière laser à l'entrée du dispositif de polarisation (11) au moins lorsque la lumière laser présente une polarisation rectiligne à l'entrée du dispositif de polarisation (11).

13. Interféromètre selon l'une des revendications 1 à 12, caractérisé par le fait que le dispositif de polarisation (11) présente une plaque quart d'onde (30) et un polariseur (31) qui est mis sur le circuit après celle-ci, leurs axes formant entre eux un angle de 45 degrés.

14. Interféromètre selon les revendications 2, 3 et la revendication 13, caractérisé par le fait que le dispositif de polarisation (11) - vu dans le sens du passage de la lumière - présente une lentille collimatrice (36) côté de l'entrée, une plaque quart d'onde (30), un polariseur et une lentille de couplage, du côté de la sortie, pour coupler la lumière dans un guide d'ondes lumineuses (26) conduisant au diviseur de faisceau (7).

15. Interféromètre selon l'une des revendications 1 à 12, caractérisé par le fait que le dispositif de polarisation (11) présente un dispositif (36′) pour élargir ou diviser le faisceau de lumière laser sortant de la fibre optique flexible (5) ou d'une fibre (5′) qui lui est reliée, que le dispositif de polarisation (11) présente deux polariseurs (40,41) dont les directions de polarisation sont perpendiculaires l'une à l'autre et qui sont, chacun, parcourus par un faisceau partiel, que derrière ces polariseurs (40,41) est en outre prévu au moins un polariseur (42) qui est orienté à 45 degrés par rapport aux deux polariseurs mentionnés (40,41) et à travers lequel passent les deux faisceaux partiels et qu'enfin est prévu un dispositif (38′) pour regrouper les deux faisceaux partiels après leur passage à travers les polariseurs mentionnés (40,41,42).

16. Interféromètre selon les revendications 2,3 et la revendication 15, caractérisé par le fait que le dispositif de polarisation (11) - vu dans le sens du passage de la lumière - présente:
- du côté de l'entrée, une lentille collimatrice (36′) qui réalise la collimation du faisceau de lumière laser,
- deux polariseurs (40,41) contigus, parcourus par le faisceau de lumière laser élargi, et orientés perpendiculairement l'un à l'autre,
- un polariseur (42) venant à la suite et orienté à 45 degrés par rapport aux deux polariseurs mentionnés (40,41) et
- du côté de la sortie, une lentille de couplage (38′) pour coupler le faisceau de lumière laser élargi dans un guide d'ondes (26) qui conduit au diviseur de faisceau (7).

17. Interféromètre selon les revendications 15 et 16, caractérisé par le fait que les deux faisceaux partiels présentent, lors de leur recombinaison, une intensité différente.

18. Interféromètre selon les revendications 16 et 17, caractérisé par le fait que le faisceau de lumière laser élargi intercepte les deux polariseurs (40, 41), orientés perpendiculairement l'un par rapport à l'autre, sur des surfaces d'aire différente.

19. Interféromètre selon l'une des revendications 1 à 12, caractérisé par le fait que le dispositif de polarisation présente une dispositif de division (43) pour diviser en deux faisceaux partiels (44a,b), à polarisation rectiligne perpendiculaire l'une à l'autre, la lumière laser qui arrive, par le fait qu'est en outre prévu un dispositif (45) de rotation de la direction de la polarisation pour faire tourner la direction de la polarisation d'au moins l'un des deux faisceaux partiels (44b) et que du côté de la sortie est prévu un dispositif de recombinaison (48) dans lequel sont superposés les faisceaux partiels (44a,b) dont le dispositif de rotation de la direction de polarisation a fait tourner la direction de leur polarisation rectiligne pour les amener parallèles l'une à l'autre.

20. Interféromètre selon la revendication 19, caractérisé par le fait que le dispositif de division est un diviseur de faisceau à polarisation (43).

21. Interféromètre selon la revendication 19 ou 20, caractérisé par le fait que le dispositif de rotation de la direction de la polarisation est une plaque demi-onde (45) disposée dans l'un des deux faisceaux partiels (44b).

22. Interféromètre selon les revendications 19 à 21, caractérisé par le fait que le dispositif de recombinaison est un diviseur de faisceau (48) ou un miroir semi-transparent.

23. Interféromètre selon l'une des revendications 15 à 22, caractérisé par le fait que le dispositif de polarisation (11) présente un dispositif (53) pour régler la différence de marche entre les deux faisceaux partiels (44a,b) avant ou lors de leur recombinaison.

24. Interféromètre selon la revendication 23, caractérisé par le fait que le dispositif prévu pour régler la différence de marche présente au moins dans l'un des deux faisceaux partiels un élément électro-optique (53) ou un élément piézo-électrique qui modifie la différence de longueur du chemin géométrique des deux faisceaux partiels.

25. Interféromètre selon la revendication 23 ou 24, caractérisé par le fait qu'est prévu un dispositif de régulation (52,52′) pour la régulation de la différence de marche des deux faisceaux partiels (44a,b) en fonction de l'intensité de la lumière laser, polarisée rectilignement, à la sortie du dispositif de polarisation (11).

26. Interféromètre selon l'une des revendications 19 à 25, caractérisé par le fait qu'avant le dispositif de division (diviseur de faisceau à polarisation 43) est disposée une plaque quart d'onde (54) qui de préférence peut tourner autour de la direction du faisceau lumineux et/ou pivoter hors du chemin du faisceau.

27. Interféromètre selon l'une des revendications 1 à 26, caractérisé par le fait que la fibre optique d'amenée de la lumière laser est une fibre optique (5′) qui conserve la polarisation.

28. Interféromètre selon la revendication 27, caractérisé par le fait que le dispositif de polarisation (11) est formé par un unique polariseur rectiligne (65).

29. Interféromètre pour déterminer la position et le déplacement d'un miroir de mesure mobile (12)
- comportant une tête d'interféromètre (1) au boîtier (4) ou support, de laquelle sont rigidement reliés un diviseur de faisceau (7) prévu pour diviser la lumière laser en un faisceau de mesure et en un faisceau de référence, ainsi qu'un dispositif de recombinaison (15), le faisceau de mesure, qui passe par le miroir de mesure mobile (12), et le faisceau de référence, qui passe par une voie de référence fixe, interférant dans le dispositif de recombinaison (15) en formant au moins un signal d'interférence optique,
- comportant une source de lumière laser (2) disposée à l'extérieur de la tête d'interféromètre (1), au moins une fibre optique flexible (5,5a) prévue pour amener la lumière laser, étant disposée entre la source de lumière laser (2) et le diviseur de faisceau (7) de la tête d'interféromètre (1), et
- comportant un dispositif de détection photo-électrique (3) pour traiter le signal, ou les signaux, d'interférence provenant du dispositif de recombinaison (15),
caractérisé
par le fait qu'en avant de l'extrémité, du côté de la source lumineuse, de la fibre optique flexible ou des fibres optiques flexibles (5,5a), prévue(s) pour amener la lumière laser, est disposé, de façon connue en soi, un dispositif de polarisation (11), qu'après la fibre optique flexible ou les fibres optiques flexibles (5,5a), de préférence au voisinage du diviseur de faisceau (7), est disposé un dispositif (66) pour détecter l'état de polarisation de la lumière laser, et que le dispositif de polarisation (11), réglable en ce qui concerne l'état de polarisation de la lumière qui en sort, est réglé en fonction de l'état détecté de la polarisation, de façon telle que parvienne en permanence à l'entrée du diviseur de faisceau (7) de la lumière laser présentant une polarisation prédéterminée, de préférence rectiligne.

30. Interféromètre selon la revendication 29, caractérisé par le fait qu'en avant du diviseur de faisceau est disposé un diviseur de faisceau auxiliaire qui fait bifurquer une partie de la lumière laser vers le dispositif de détection de la polarisation.

31. Interféromètre selon la revendication 29 ou 30, caractérisé par le fait que le dispositif de polarisation présente les éléments électro-optiques et/ou les éléments réglables mécaniquement pour modifier l'état de polarisation de la lumière qui en sort.

32. Interféromètre selon l'une des revendications 1 à 31, caractérisé par le fait que dans le dispositif de polarisation la lumière laser est en permanence guidée dans des conducteurs d'ondes lumineuses (dans 43′;58a,b;59a,b; dans 48′), de préférence des fibres optiques.

33. Interféromètre selon les revendications 19 à 32, caractérisé par le fait qu'après le dispositif de division (43), les deux faisceaux partiels sont chacun guidés dans une fibre optique (58a,58b) qui conserve la polarisation, ces fibres optiques (58a,58b) subissant, l'une par rapport à l'autre, une rotation telle que les faisceaux partiels tout d'abord polarisés perpendiculairement l'un à l'autre, sont, lors de leur recombinaison dans le dispositif de recombinaison (48′), polarisés parallèlement l'un à l'autre.

34. Interféromètre selon la revendication 33, caractérisé par le fait que pour régler la différence de marche relative entre les deux faisceaux partiels, on exerce une pression mécanique, par exemple par l'intermédiaire d'un élément piézo-électrique (60) sur au moins l'une des deux fibres optiques (59b) dans lesquelles passent les faisceaux partiels.
